# EUROPÄISCHE PATENTANMELDUNG

(11) **EP 4 601 245 A1**
(43) Veröffentlichungstag der Anmeldung: **13.08.2025**
(21) Anmeldenummer: 24156887.2
(22) Anmeldetag: 09.02.2024
(51) Int. Cl.: H04L 9/40, G05B 19/418, H04L 9/32, H04L 67/12

(54) **ZERTIFIKATSMANAGEMENT IN EINER TECHNISCHEN ANLAGE**

(71) Anmelder: Siemens Aktiengesellschaft, 80333 München (DE)
(72) Erfinder: Laurig, Frank, 92369 Sengenthal (DE); Palmin, Anna, 76187 Karlsruhe (DE)
(74) Vertreter: Siemens Patent Attorneys

(57) **Zusammenfassung**

Vorgeschlagen wird ein Leitsystem (1) für eine technische Anlage, insbesondere eine Fertigungs- oder Prozessanlage, das wenigstens eine Zertifizierungsstelle (3) umfasst, die für ein Ausstellen und Revozieren von Zertifikaten für Anlagenkomponenten (5) der technischen Anlage zuständig und ausgebildet ist.

Das Leitsystem (1) ist dadurch gekennzeichnet, dass in dem Leitsystem (1) ein Zertifikatsdienst (4) implementiert ist, der mit der Zertifizierungsstelle (3) direkt oder indirekt über eine Registrierungsstelle (2) in einer Verbindung gemäß dem HTTPS-Protokoll steht, wobei der Zertifikatsdienst (4) dazu ausgebildet ist, von einer Anlagenkomponente (5) der technischen Anlage einen Antrag auf Integration der Anlagenkomponente (5) in ein Kommunikationsnetzwerk der technischen Anlage auf Basis des HTTPS-Protokolls zu erhalten und die Anlagenkomponente (5) unter Zuhilfenahme eines von der Anlagenkomponente (5) unterstützten Zertifikatsmanagementprotokolls und unter Einbezug der Registrierungsstelle (2) und/oder der Zertifizierungsstelle (3) in das Kommunikationsnetzwerk der technischen Anlage zu integrieren.

## Beschreibung

Die Erfindung betrifft ein Leitsystem für eine technische Anlage, insbesondere eine Fertigungs- oder Prozessanlage, das wenigstens eine Zertifizierungsstelle umfasst, die für ein Ausstellen und Revozieren von Zertifikaten für Anlagenkomponenten der technischen Anlage zuständig und ausgebildet ist. Außerdem betrifft die Erfindung einen computerimplementierten Zertifikatsdienst für ein Leitsystem einer technischen Anlage, insbesondere Prozess- oder Fertigungsanlage. Zudem betrifft die Erfindung ein Verfahren zur sicheren Integration einer Anlagenkomponente in ein Kommunikationsnetzwerk einer technischen Anlage, insbesondere Prozess- oder Fertigungsanlage.

Die sog. "Secure Device Onboarding" Verfahren (siehe z.B. BRSKI nach https://datatracker.ietf.org/doc/rfc8995/, FDO nach https://fidoalliance.org/specs/FDO/FIDO-Device-Onboard-RD-v1.0-20201202.html) finden zunehmend Einzug in technischen Anlagen. Dabei stehen diese Verfahren im Einklang mit dem Grundprinzip von Zero Trust: "Never trustalways verify".

Einerseits ermöglichen die entsprechenden Verfahren eine sog. Identitätsprüfung (engl. Proof of Identity) und/oder die Originalitätsprüfung (engl. Proof of Originality, siehe z.B. die Anforderung der IEC 62443 "Provisioning product supplier roots of trust). Andererseits ermöglichen sie die Provisionierung der einsatzumgebungsspezifischen Credentials (z.B. den einsatzumgebungsspezifischen, für die Authentifizierung erforderlichen Zertifikaten mit den zugehörigen kryptographischen Schlüsseln) auf die Anlagenkomponenten der technischen Anlage auf sichere Art und Weise.

Als besonders erstrebenswert haben sich dabei die sog. Secure Zero Touch Device Onboarding-Verfahren erwiesen, weil sie eine Identitäts-/Originalitätsprüfung sowie die Provisionierung von einsatzumgebungsspezifischen Credentials vollautomatisiert, d.h. ohne jegliche Unterstützung durch den Benutzer, ermöglichen. Dadurch gelten sie als besonders benutzerfreundlich gelten. Sogar das automatische Finden der (in der Regel als Registrar bezeichneten) Instanz, gegen die die Identitäts-/Originalitätsprüfung erbracht wird, im Netzwerk und die für die Provisionierung der o.g. Daten auf das Gerät erfolgen im Rahmen der Secure Zero Touch Onboarding-Verfahren vollautomatisiert. Dabei kommen beispielsweise Automatic Discovery-Mechanismen wie z.B. DNS/DHCP, mDNS oder GRASP zum Einsatz.

Ferner ist es zu beachten, dass in manchen Einsatzumgebungen in einer technischen Anlage wie einer Prozessanlage oder einer Fertigungsanlage nicht nur an das jeweilige Netzwerk angeschlossene Anlagenkomponenten im Rahmen des Secure Device Onboarding oder gleich im Anschluss daran gerätespezifische LDevID-Generic-Zertifikate provisioniert bekommen sollen. Vielmehr sollen auch die auf den Anlagenkomponenten, beispielsweise in den sog. Docker-Containern, gehosteten Applikationen ebenfalls die erforderlichen applikationsspezifischen LDevID-App-Zertifikate erhalten. Dabei spricht man vom Ausrollen (engl. Enrollment) der applikationsspezifischen Zertifikate. Dieser Vorgang wird auch als Bootstrapping zusammengefasst. Dieser Schritt ist zwar kein verbindlicher Bestandteil der bekannten Spezifikationen wie z.B. der o.g. BRSKI-Spezifikation, erweist sich jedoch in vielen bekannten Szenarien als sinnvoll.

Die meisten Secure Device Onboarding Verfahren wie z.B. OPC UA Part 21 und BRSKI setzen das Vorhandensein einer speziellen Secure Device Onboarding Infrastruktur voraus. Beispielsweise sollte bei der Verwendung von BRSKI ein BRSKI Registrar in der Einsatzumgebung zur Verfügung stehen. Zusätzlich sollte vom Hersteller ein sog. BRSKI MASA online zur Verfügung gestellt werden. Die Verwendung des Secure Device Onboarding Verfahrens nach OPC UA Part 21 setzt das Vorhandensein eines OPC UA Part 21 Registrar in der Einsatzumgebung und die Bereitstellung eines sog. Ticket Servers nach OPC UA Part 21 voraus.

In den industriellen Umgebungen findet aktuell zunehmend die sog. Public Key Infrastruktur (PKI) Einzug, damit das automatisierte Management der X.509-Zertfikate möglich ist. Dabei wird eine "Registration Authority" (z.B. die sog. SINEC Registration Authority der Firma Siemens) als Gateway zwischen den Anlagenkomponente bzw. Applikationen und einer bestehenden, in der Regel im IT-Netzwerk des Anlagenbetreibers betriebenen "Certification Authority" genutzt.

Gemeinsam bilden die genannte "Registration Authority (RA)" und die "Certification Authority (CA)" eine sog. Public Key Infrastruktur (PKI). Die Anlagenkomponenten werden aktuell durch die Nutzung von speziellen Bibliotheken (wie z.B. des sog. generischen CMP-Clients) zunehmend dazu befähigt, die X.509-Zertifikate, die sie beispielsweise für die sichere OPC UA-/HTTPS-Kommunikation benötigen, von einer derartigen PKI automatisch zu beziehen.

Die Vertrauenswürdigkeit der sogenannten "Issuing CA" selbst kann dadurch gewährleistet werden, dass ihr eigenes Zertifikat durch eine vertrauenswürdige Zwischen-CA (engl. Intermediate CA) signiert ist, deren Zertifikat wiederum durch eine weitere Intermediate CA signiert ist. Die gesamte Kette führt in der Regel zu einer sog. Wurzelzertifizierungsstelle (engl. Root CA), die selbstsigniert ist (d.h. ihr Zertifikat selbst signiert hat). Die Wurzelzertifizierungsstelle wird nachweisbar sicher - gemäß den im RFC 3647 aufgeführten Certificate Policies - aufbewahrt. Die Root CA kann auch als Vertrauensanker (engl. Trust Anchor) bezeichnet werden.

Eine Registrierungsstelle (engl. Registration Authority, kurz: RA) hat als eine weitere zentrale Komponente einer Public Key Infrastruktur einer Automatisierungsanlage insbesondere die Aufgabe, die Zertifikatsanträge (engl. Certificate Signing Requests, CSR) von diversen Anlagenkomponenten entgegenzunehmen. In Rücksprache mit einem sog. RA-Inventory, das auch als Geräteinventar bezeichnet wird, und dessen Inhalte z.B. aus einer Konfigurationsbeschreibung einer technischen Anlage entstammen können, kann die Registrierungsstelle die Zertifikatsanträge validieren. Eine solche Registrierungsstelle ist beispielsweise in der Druckschrift EP 3 402 152 A1 offenbart.

Im Gegensatz zu einer PKI ist eine Secure Device Onboarding Infrastruktur eher sehr selten in den industriellen Einsatzumgebungen vorhanden. Für die Anwender bedeutet dies, dass das Onboarding einschl. einer Identitäts- und einer Originalitätsprüfung der Analgenkomponenten und das anschließenden Bootstrapping der umgebungsspezifischen Zertifikate, insb. des Zertifikats der sog. "Root Certification Authority", die als sog. Trust Anchor bzw. Root of Trust agiert, manuell durchgeführt werden muss. Dieses Vorgehen ist bei einer oftmals hohen Anzahl von Anlagenkomponenten mit einem erheblichen Aufwand verbunden und erfordert eine aufwändige Einarbeitung des Anlagenpersonals.

Des Weiteren sind aktuell keine Open Source Bibliotheken zum Unterstützen eines automatisierten Secure Device Onboardings, die auf verschiedenen OT-/loT-Geräten zum Einsatz kommen könnten, bekannt. Es liegen lediglich prototypische Implementierung eines sog. BRSKI Pledge vor. Im Gegensatz dazu ist beispielsweise der sog. Generic CMP Client als eine Open Source Library verfügbar und dazu noch in OpenSSL integriert, vgl. hierzu https://github.com/siemens/gencmpclient.

Die EP 3 993 339 B1 offenbart eine Komponente als PKI-Proxy, die an der Netzwerksegmentgrenze eines segmentierten Netzwerks dazu eingesetzt wird, die Zertifikatsanträge (engl. Certificate Signing Requests, CSRs) von den Anlagenkomponenten bzw. Applikationen, die die (zentrale) Registrierungsstelle netzwerktechnisch nicht erreichen können, an die Registrierungsstelle (z.B. die SINEC Registration Authority) weiterzuleiten.

Der Erfindung liegt die Aufgabe zugrunde, ein Leitsystem für eine technische Anlage anzugeben, das zu einer Erhöhung der Verfügbarkeit der technischen Anlage bei einer gleichzeitig erhöhten Manipulationssicherheit und verbesserten Nutzerfreundlichkeit beiträgt.

Diese Aufgabe wird gelöst durch ein Leitsystem für eine technische Anlage, insbesondere eine Fertigungs- oder Prozessanlage, das wenigstens eine Zertifizierungsstelle umfasst, die für ein Ausstellen und Revozieren von Zertifikaten für Anlagenkomponenten der technischen Anlage zuständig und ausgebildet ist, mit den Merkmalen des Anspruchs 1. Zudem wird die Aufgabe gelöst durch einen computerimplementierten Zertifikatsdienst für ein Leitsystem einer technischen Anlage, insbesondere Prozess- oder Fertigungsanlage, gemäß Anspruch 10. Zudem wird die Aufgabe gelöst durch ein Verfahren zur sicheren Integration einer Anlagenkomponente in ein Kommunikationsnetzwerk einer technischen Anlage gemäß Anspruch 11. Vorteilhafte Weiterbildungen ergeben sich aus den abhängigen Ansprüchen.

Ein Leitsystem eingangs beschriebener Art ist dadurch gekennzeichnet, dass in dem Leitsystem ein Zertifikatsdienst implementiert ist, der mit der Zertifizierungsstelle direkt oder indirekt über eine Registrierungsstelle in einer Verbindung gemäß dem HTTPS-Protokoll steht, wobei der Zertifikatsdienst dazu ausgebildet ist, von einer Anlagenkomponente der technischen Anlage einen Antrag auf Integration in ein Kommunikationsnetzwerk der technischen Anlage auf Basis des HTTPS-Protokolls zu erhalten und die Anlagenkomponente unter Zuhilfenahme eines von der Anlagenkomponente unterstützten Zertifikatsmanagementprotokolls und unter Einbezug der Registrierungsstelle und/oder der Zertifizierungsstelle sicher in das Kommunikationsnetzwerk der technischen Anlage zu integrieren.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann sogenannte prozess- oder fertigungsnahe Komponenten umfassen, die zur Ansteuerung von Aktoren bzw. Sensoren dienen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Fertigungsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Bei einer Anlagenkomponente kann es sich um einzelne Messumformer für Sensoren oder Steuergeräte für Aktoren der technischen Anlage handeln. Eine Anlagenkomponente kann aber auch ein Zusammenschluss mehrerer solcher Messumformer oder Steuergeräte sein, beispielsweise ein Motor, ein Reaktor, eine Pumpe oder ein Ventilsystem. Übergeordnete Geräte wie ein Automatisierungsgerät, ein Engineering Station Server, ein Operator Station Server oder eine dezentrale Periphere sind ebenfalls unter dem Begriff "Anlagenkomponente" zu fassen.

Ein Automatisierungsgerät ist dabei ein technisches Gerät, das zur Realisierung einer Automatisierung benutzt wird. Es kann sich dabei beispielsweise um eine speicherprogrammierbare Steuerung handeln, die eine übergeordnete Steuerungsfunktion für untergeordnete Steuerungen darstellt.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen (wie einem Automatisierungsgerät) der technischen Anlage her und gibt Daten der technischen Anlage an sogenannte Clients weiter, die zur Bedienung und Beobachtung eines Betriebs der einzelnen Funktionselemente der technischen Anlage dienen.

Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem Zertifikat wird ein digitaler Datensatz verstanden, der bestimmte Eigenschaften (in diesem Fall von Maschinen, Geräten, Applikationen und dergleichen) bestätigt. Eine Authentizität und Integrität des Zertifikats können in der Regel mittels kryptografischer Verfahren verifiziert werden.

Die Zertifizierungsstelle wird auch als eine sogenannte "Issuing CA (Certification Authority)" bezeichnet. Eine derartige Issuing CA ist in der Regel stets online und stellt, basierend auf eingehenden Zertifikatsanträgen, Zertifikate für diverse Antragsteller aus, die sie mit ihrem eigenen Issuing CA Zertifikat signiert. Die Vertrauenswürdigkeit der Issuing CA wird dadurch sichergestellt, dass ihr eigenes Issuing CA Zertifikat durch das Zertifikat einer vertrauenswürdigen Wurzelzertifizierungsstelle (auch als "Root CA" bezeichnet), die sich in einer abgesicherten Umgebung befindet, signiert ist. Hierbei ist zu beachten, dass die Root CA die meiste Zeit offline ist und nur dann - unter der Einhaltung strengster Sicherheitsvorkehrungen - aktiviert bzw. eingeschaltet wird, wenn sie ein Zertifikat für eine zugehörige Issuing CA ausstellen soll. Die Root CA kann sich außerhalb der technischen Anlage befinden. Die Zertifizierungsstelle und/oder die Registrierungsstelle können in einem Trust Center und/oder in einer cloudbasierten Umgebung implementiert sein. Es ist aber auch möglich, dass sich die Zertifizierungsstelle und/oder die Registrierungsstelle innerhalb der technischen Anlage ("on premise") befinden.

Unter einer Registrierungsstelle einer technischen Anlage wird eine funktionelle Instanz verstanden, die Registrierungsanfragen wie Zertifikatsanträge von Komponenten der technischen Anlage entgegennimmt, diese prüft und im Erfolgsfall insbesondere an eine Zertifizierungsstelle der technischen Anlage weiterleitet. Im vorliegenden Fall ist die Registrierungsstelle vor allem dafür vorgesehen, Zertifikatsanträge von Anlagenkomponenten der technischen Anlage zu behandeln. Die Registrierungsstelle kann eine lokale Registrierungsstelle sein, die mit einer übergeordneten globalen Registrierungsstelle kommunizieren kann, welche beispielsweise wiederum direkt in Verbindung mit einer Zertifizierungsstelle der technischen Anlage stehen kann. Die Registrierungsstelle kann einen Registrierungsservice umfassen oder durch einen solchen gegeben sein.

Das HTTPS-Protokoll steht für "Hypertext Transfer Protocol Secure" mit Stand zum Anmeldetag der vorliegenden Patentanmeldung und stellt eine sichere Version des HTTP-Protokolls dar, welches für die Übertragung von Daten in Kommunikationsnetzwerken verwendet wird. HTTPS verwendet eine Kombination aus dem HTTP-Protokoll und dem SSUTLS-Protokoll (Secure Sockets Layer/Transport Layer Security), um die Vertraulichkeit und Integrität der übertragenen Daten zu gewährleisten. Das Kommunikationsnetzwerk der technischen Anlage ermöglicht dabei eine Kommunikation zwischen einzelnen Komponenten der technischen Anlage und dient dem Austausch von Daten, Informationen oder Befehlen.

Das Zertifikatsmanagementprotokoll bietet eine standardisierte Schnittstelle oder einen Satz von Regeln und Verfahren, um verschiedene Aufgaben im Zusammenhang mit Zertifikaten durchzuführen. Es ermöglicht den Austausch von Informationen zwischen Zertifizierungsstellen, Zertifikatsantragstellern, Zertifikatsinhabern und anderen Entitäten in einem PKI-System. Bei dem Zertifikatsmanagementprotokoll kann es sich beispielsweise um das CMP-Protokoll (Certification Management Protocol) nach RFC4210 handeln.

Der Zertifikatsdienst selbst "spricht" ausschließlich das HTTPS-Protokoll, d.h. er kann Zertifikatsanträge (engl. "Certificate Signing Requests" bzw. "Signing Requests") sicher (d.h. authentizitätsgeschützt und verschlüsselt) transportieren bzw. übertragen, ohne diese Anträge im Detail "verstehen" (d.h. parsen, validieren und interpretieren) zu können. Die Integrationsanfrage der Anlagenkomponente nimmt er daher auch gemäß dem HTTPS-Protokoll entgegen, validiert sie und leitet sie mittels des HTTPS-Protokolls an die Registrierungsstelle bzw. die Zertifizierungsstelle weiter. Die Integration der Anlagenkomponente erfolgt dann unter Verwendung des Zertifikatsmanagementprotokolls, beispielsweise mittels des CMP-Protokolls unter Verwendung des HTTPS-Protokolls ("CMP over HTTPS").

Das erfindungsgemäße Leitsystem gestaltet sich dahingehend vorteilhaft, dass keine komplexe und umfangreiche "Secure Device Onboarding" Infrastruktur bereitgestellt werden muss. Vielmehr ist eine an sich bekannte PKI-Infrastruktur mit einer Zertifizierungsstelle und einer optional vorhandenen Registrierungsstelle ausreichend, um eine sichere Integration der Anlagenkomponente in das Kommunikationsnetzwerk der technischen Anlage zu ermöglichen.

Besonders vorteilhaft ist, dass Anlagenkomponenten, die die Registrierungsstelle oder die Zertifizierungsstelle kommunikationstechnisch nicht erreichen können, über den Zertifikatsdienst auf besonders einfache und effiziente Art und Weise an die für die Integration zuständigen Stellen vermittelt werden können. Der Zertifikatsdienst kann dabei durch die ausschließliche Unterstützung und Verwendung des HTTPS-Protokolls ressourcenschonend und aufwandsarm ausgestaltet sein.

Der Zertifikatsdienst kann dazu ausgebildet sein, eine Identifikation der in das Leitsystem zu integrierenden Anlagenkomponente mit Informationen aus dem Leitsystem abzugleichen, welche Informationen Aussagen darüber umfassen, welche Anlagenkomponenten für eine Integration in das Kommunikationsnetzwerk der technischen Anlage vorgesehen sind. Hierzu kann der Zertifikatsdienst Zugriff auf Datenbanken haben, in den Lieferscheine, Komponentenlisten oder dergleichen hinterlegt sind, die es dem Zertifikatsdienst ermöglichen, zu prüfen, ob die Anlagenkomponente überhaupt in dem Kommunikationsnetzwerk der technischen Anlage zu erwarten ist. Der Zertifikatsdienst kann dabei einen Operator der technischen Anlage über das Ergebnis der Prüfung benachrichtigen, damit dieser gegebenenfalls darauf reagieren kann. Die Benachrichtigung kann über eine akustische oder eine visuelle Signalisierung erfolgen, insbesondere über ein in dem Leitsystem implementiertes Meldungssystem.

Der Zertifikatsdienst kann dazu ausgebildet sein, die Integration der Anlagenkomponente in das Kommunikationsnetzwerk der technischen Anlage zu verweigern, wenn die Prüfung ergeben hat, dass die Integration gemäß den Informationen aus dem Leitsystem nicht vorgesehen ist. Dadurch wird die Integration der Anlagenkomponente in das Kommunikationsnetzwerk sicherer und nicht erwünschte Anlagenkomponenten können erst gar nicht in Kontakt mit der Registrierungsstelle bzw. Zertifizierungsstelle treten.

Im Rahmen einer vorteilhaften Weiterbildung der Erfindung ist der Zertifikatsdienst dazu ausgebildet, zu prüfen, ob der von der Anlagenkomponente an ihn gerichtete Antrag auf Integration in das Kommunikationsnetzwerk der technischen Anlage ein von einer vertrauenswürdigen Zertifizierungsinstanz ausgestelltes, der Anlagenkomponente als TLS-Client Zertifikat zugeordnetes Zertifikat umfasst. Dieses der Anlagenkomponente als TLS-Client Zertifikat zugeordnete Zertifikat kann z.B. ein vom Hersteller der Komponente ausgestelltes Zertifikat (wie z.B. ein sog. IDevID-Zertifikat nach IEEE 802.1AR oder ein vergleichbares, mit adäquaten Sicherheitsmaßnahmen ausgestattetes Zertifikat) oder ein vom OEM/Maschinenbauer/ Integrator ausgestellte Zertifikat (wie z.B. ein sog. LDevID-Zertifikat) sein. Dabei bedeutet die Abkürzung "IDevID" nach der Norm IEEE 802.1AR "Initial Device Identifier", während die Abkürzung "LDevID" "Locally Significant Device Identifier" bedeutet. Allgemein wird vorliegend unter einem IDevID-Zertifikat nicht nur ein IDevID-Zertifikat nach IEEE 802.1AR, sondern auch ein anderes vom Hersteller ausgestelltes Zertifikat mit adäquaten Inhalten, u.a. adäquaten Security-Mechanismen verstanden.

Ein TLS-Client Zertifikat ist dabei ein digitales Zertifikat, das von der vertrauenswürdigen Zertifizierungsinstanz ausgestellt wurde und von einem TLS-Client der Anlagenkomponente dazu verwendet wird, seine Identität gegenüber dem Zertifikatsdienst nachzuweisen. Für den Fall, dass das IDevID-Zertifikat als TLS-Client Zertifikat der Anlagenkomponente zum Einsatz kommt, entspricht die Identität des TLS-Clients der Identität der Anlagenkomponente. Im Gegensatz zum Serverzertifikat, das vom TLS-Server präsentiert wird, wird das TLS-Client Zertifikat vom TLS-Client während des TLS-Handshakes vorgelegt.

Das TLS-Client Zertifikat umfasst Informationen über die Anlagenkomponente, wie beispielsweise den Namen, die Identität oder den öffentlichen PKI-Schlüssel der Anlagenkomponente. Das TLS-Client Zertifikat kann von der Zertifizierungsinstanz digital signiert sein, um die Echtheit und Integrität des TLS-Client Zertifikats zu gewährleisten.

Während des TLS-Handshakes weist sich der TLS-Client gegenüber dem Zertifikatsdienst mit seinem TLS-Client Zertifikat aus, um seine Identität zu beweisen. Der Zertifikatsdienst überprüft das TLS-Client Zertifikat, indem er unter anderem die Signatur und die Gültigkeit des TLS-Client Zertifikats überprüft. Wenn das TLS-Client Zertifikat gültig ist, kann die TLS-Verbindung fortgesetzt werden und die nachfolgende Integration der Anlagenkomponente in das Kommunikationsnetzwerk erfolgen.

Die Anlagenkomponente kann den initialen Antrag auf Integration in das Kommunikationsnetzwerk mit einem zugehörigen Herstellerzertifikat, insbesondere mit dem sogenannten IDevID-Zertifikat, signieren. Dabei handelt es sich um ein initiales Zertifikat (Initial Device Identifier), welches der Anlagenkomponente von ihrem Hersteller ausgestellt wurde. Das IDevID-Zertifikat kann von der Anlagenkomponente vorteilhafterweise als das zuvor beschriebene TLS-Client Zertifikat verwendet werden. Falls sie beispielsweise das sog. Zertifikatsmanagementprotokoll (CMP) verwendet, spricht man davon, dass das IDevID-Zertifikat die Rolle des sog. CMP Signing Zertifikats spielt. Parallel/zusätzlich verwendet sie das gleiche Zertifikat als TLS-Client-Zertifikat zum sicheren Transport des signierten Antrags.

Der Zertifikatsdienst kann zum Zwecke der Prüfung des TLS-Client Zertifikates Zugriff auf Zertifikatsketten zu bestimmten vertrauenswürdigen Zertifizierungsstellen bestimmter Hersteller oder dergleichen haben. Dabei kann geprüft werden, ob die von dem TLS-Client gelieferte Zertifikatskette mit einer dem Zertifikatsdienst zugänglichen Zertifikatskette übereinstimmt. Dabei können im Rahmen der Überprüfung je nach vorliegender Fallkonstellation auch nur das Zertifikat der Wurzelzertifizierungsstelle (anstelle der kompletten Zertifikatskette) berücksichtigt werden. Zusätzlich kann auch das Endgerätezertifikat (z.B. ein vom Hersteller ausgestellte Zertifikat wie beispielsweise ein IDevID-Zertifikat nach IEEE 802.1AR oder das von einem OEM-/einem Distributor auf die Anlagenkomponente provisionierte Zertifikat wie beispielsweise ein LDevID-Zertifikat) berücksichtigt werden. Dies vereinfacht die Prüfung der Authentizität und der Identität der Anlagenkomponente.

Für den Fall, dass die zuvor erläuterte Prüfung durch den Zertifikatsdienst erfolgreich war, ist der Zertifikatsdienst bevorzugt dazu ausgebildet, den Antrag der Anlagenkomponente auf Integration in das Kommunikationsnetzwerk der technischen Anlage unter Verwendung eines dem Zertifikatsdienst zugeordneten TLS-Client Zertifikats an die Registrierungsstelle oder die Zertifizierungsstelle weiterzuleiten.

Besonders bevorzugt sind die Registrierungsstelle oder die Zertifizierungsstelle dazu ausgebildet, zu prüfen, ob der Zertifikatsdienst vertrauenswürdig ist, insbesondere durch einen Abgleich mit einem Vertrauensinventar, beispielsweise einem Inventar der Registrierungsstelle, einem Inventar der Zertifizierungsstelle oder einem weiteren Inventar. Dadurch wird die Sicherheit der Integration weiter erhöht. Die Registrierungsstelle oder die Zertifizierungsstelle können prüfen, ob die gesamte Zertifikatskette zum (Signierungs-)Zertifikat, mit dem der Antrag dieser Komponente signiert wurde, vertrauenswürdig ist, d.h. von einer vertrauenswürdigen Wurzelzertifizierungsstelle (Root CA) abstammt.

Weiterhin können die Registrierungsstelle oder die Zertifizierungsstelle dazu ausgebildet sein, zu prüfen, ob ihnen eine Identität der Anlagenkomponente bereits bekannt ist, und für den Fall, dass diese bisher nicht bekannt war, die Identität in einem Inventar zu hinterlegen. Dies erleichtert die erneute Integration der Anlagenkomponente, falls diese für eine bestimmte Zeit aus dem Kommunikationsnetzwerk entfernt werden müsste. Das Inventar kann über an sich bekannte Funktionalitäten zum Filtern und Suchen von Einträgen verfügen, so dass die dem Zertifikatsdienst bereits bekannten Anlagenkomponenten einfach und effizient identifiziert werden können. Dies geruht speziell für den Fall, dass mehrere Zertifikatsdienste implementiert sind, von Vorteil.

Im Rahmen einer vorteilhaften Weiterbildung der Erfindung ist die Zertifizierungsstelle dazu ausgebildet, ein Zertifikat (wie beispielsweise ein sog. LDevID-Zertifikat nach IEEE 802.1AR oder ein Kommunikationszertifikat für die Kommunikation innerhalb des Kommunikationsnetzwerkes der technischen Anlage direkt, oder indirekt über die Registrierungsstelle, an den Zertifizierungsdienst zu übermitteln, welcher dieses Zertifikat der Anlagenkomponente zur Verfügung stellt, um sie in das Kommunikationsnetzwerk der technischen Anlage zu integrieren. Außerdem wird die zugehörige Zertifikatskette (engl. Certificate Chain) oder zumindest das Zertifikat der zugehörigen Wurzelzertifizierungsstelle (engl. Root CA) zum o.g. Zertifikat an die Anlagenkomponente übermittelt. Dieses Zertifikat wird auch als Vertrauensanker (engl. Root of Trust) bezeichnet. Nach dem Abschluss der Zertifikatsübermittlung und der Übermittlung der Zertifikatskette und des Vertrauensankers an die Anlagenkomponente ist die sichere Integration der Anlagenkomponente in das Kommunikationsnetzwerk der technischen Anlage abgeschlossen.

Die zuvor erläuterte Aufgabe wird zudem gelöst durch einen computerimplementierten Zertifikatsdienst für ein Leitsystem einer technischen Anlage, insbesondere Prozess- oder Fertigungsanlage, der dazu ausgebildet ist, mit einer Zertifizierungsstelle des Leitsystems der technischen Anlage direkt, oder indirekt über eine Registrierungsstelle des Leitsystems der technischen Anlage, eine Verbindung auf Basis des HTTPS-Protokolls aufzubauen, und der dazu ausgebildet ist, von einer Anlagenkomponente der technischen Anlage einen Antrag auf Integration in eine Kommunikationsnetzwerk der technischen Anlage auf Basis des HTTPS-Protokolls zu erhalten und die Anlagenkomponente unter Zuhilfenahme eines von der Anlagenkomponente unterstützten Zertifikatsmanagementprotokolls und unter Einbezug der Registrierungsstelle und/oder der Zertifizierungsstelle sicher in ein Kommunikationssystem der technischen Anlage zu integrieren.

Außerdem wird die Aufgabe gelöst durch ein Verfahren zur sicheren Integration einer Anlagenkomponente in ein Kommunikationsnetzwerk einer technischen Anlage, insbesondere Prozess- oder Fertigungsanlage, umfassend:
a) Richten eines Antrages auf Integration in das Kommunikationsnetzwerk der technischen Anlage auf Basis des HTTPS-Protokolls durch die Anlagenkomponente an einen Zertifikatsdienst eines Leitsystems für die technische Anlage, wobei das Leitsystem wenigstens eine Zertifizierungsstelle umfasst, die für ein Ausstellen und Revozieren von Zertifikaten für Anlagenkomponenten der technischen Anlage zuständig und ausgebildet ist,
b) Herstellen einer Verbindung oder Nutzen einer bestehenden Verbindung des Zertifikatsdienstes mit der Registrierungsstelle oder der Zertifizierungsstelle auf Basis des HTTPS-Protokolls;
c) Integrieren der Anlagenkomponente unter Zuhilfenahme eines von der Anlagenkomponente unterstützten Zertifikatsmanagementprotokolls und unter Einbezug der Registrierungsstelle und/oder der Zertifizierungsstelle des Leitsystems in das Kommunikationsnetzwerk der technischen Anlage durch den Zertifikatsdienst.

Dabei prüft der Zertifikatsdienst bevorzugt, ob der von der Anlagenkomponente an ihn gerichtete Antrag auf Integration in das Kommunikationsnetzwerk der technischen Anlage ein von einer vertrauenswürdigen Zertifizierungsinstanz ausgestelltes, der Anlagenkomponente als TLS-Client Zertifikat zugeordnetes Zertifikat umfasst. Diese Prüfung kann, unabhängig von der Prüfung durch den Zertifikatsdienst, auch von der Registrierungsstelle vorgenommen werden. Somit können sowohl der Zertifikatsdienst als auch die Registrierungsstelle in der Lage sein, eine Prüfung vorzunehmen und somit Anträge der Anlagenkomponente getrennt voneinander zu autorisieren. Es kann vorgesehen sein, dass ein Anwender des Leitsystems vorgeben kann, wer welche Prüfung vornehmen soll.

Für den Fall einer erfolgreichen Prüfung kann der Zertifikatsdienst den Antrag der Anlagenkomponente auf Integration in das Kommunikationsnetzwerk der technischen Anlage unter Verwendung eines dem Zertifikatsdienst zugeordneten TLS-Client Zertifikats an die Registrierungsstelle oder die Zertifizierungsstelle weiterleiten.

Bevorzugt übermittelt die Zertifizierungsstelle ein Zertifikat wie beispielsweise ein Kommunikationszertifikat für die Kommunikation innerhalb des Kommunikationsnetzwerkes der technischen Anlage direkt, oder indirekt über die Registrierungsstelle, an den Zertifikatsdienst, welcher das Zertifikat, insbesondere Kommunikationszertifikat, der Anlagenkomponente zur Verfügung stellt, um sie in das Kommunikationsnetzwerk der technischen Anlage zu integrieren.

Besonders bevorzugt verwendet die Anlagenkomponente vor dem Stellen des Antrages ein Verfahren zur automatisierten Erkennung des Zertifikatsdienstes, insbesondere ein mDNS-, DNS/DHCP- oder ein GRASP-Verfahren. Dadurch ist die Anlagenkomponente dazu in der Lage, den für sie zuständigen Zertifikatsdienst ohne die Hilfe eines Administrators oder sonstigen Nutzers zu finden. Alternativ kann die erforderliche Adressinformation in einer früheren Lebenszyklusphase vom Hersteller/OEM/Distributor/Integrator in einen Konfigurationsspeicher der Anlagenkomponente eingetragen werden, damit die Anlagenkomponente den Zertifikatsdienst möglichst aufwandsarm kontaktieren kann.

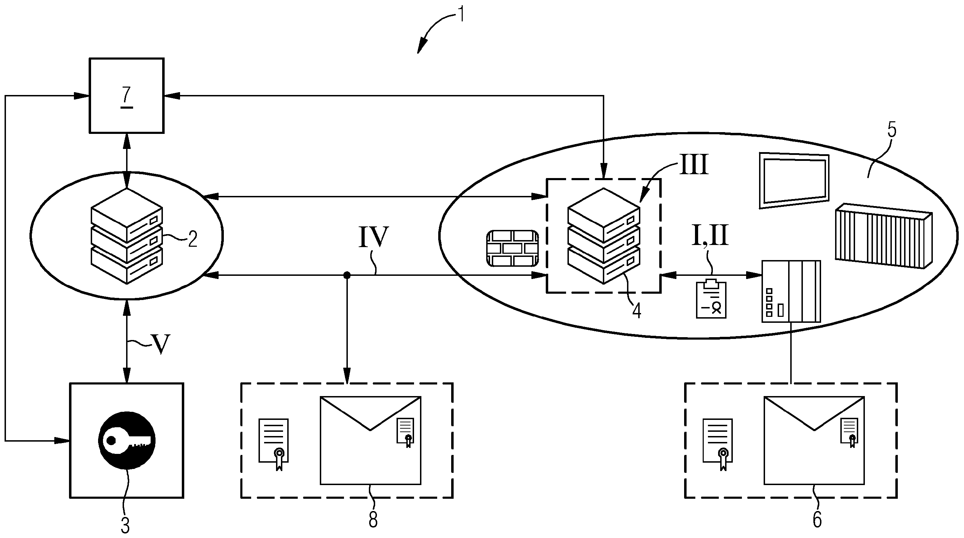

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit der Zeichnung näher erläutert wird.

In der Figur ist ein Teil eines erfindungsgemäßen Leitsystems 1 einer als Prozessanlage, d.h. als verfahrenstechnische Anlage, ausgebildeten technischen Anlage dargestellt. Das Leitsystem 1 umfasst eine Registrierungsstelle 2, eine Zertifizierungsstelle 3 und einen Zertifikatsdienst 4. Auf der rechten Seite der Figur sind Anlagenkomponenten 5 dargestellt, die in eine Kommunikationsnetzwerk der Prozessanlage integriert werden wollen, um dort mit anderen Anlagenkomponenten zu kommunizieren.

Im Rahmen einer solchen sicheren Integration einer der Anlagenkomponenten 5 in das Kommunikationsnetzwerk führt die betreffende Anlagenkomponente 5 im Rahmen eines ersten Schrittes I ein Verfahren zur automatisierten Erkennung des erreichbaren bzw. für sie zuständigen Zertifikatsdienstes 4 durch. Dieses Verfahren ist beispielsweise ein mDNS,- ein DNS/DHCP- oder ein GRASP-Verfahren. Um solch ein Verfahren durchzuführen, ist auf der Anlagenkomponente 5 ein entsprechender (Discovery) Agent implementiert.

In einem darauffolgenden Schritt II richtet die Anlagenkomponente einen Antrag auf Integration in das Kommunikationsnetzwerk der Prozessanlage an den Zertifikatsdienst 4 des Leitsystems der Prozessanlage. Dieser Antrag wird auf Basis des HTTPS-Protokolls an den Zertifikatsdienst 4 übermittelt. Der Antrag wird von der Anlagenkomponente 5 mit ihrem Herstellerzertifikat (wie beispielsweise ihrem IDevID-Zertifikat nach IEEE 802.1AR) 6 signiert, welches sie von ihrem Hersteller im Rahmen des Imprintings im Werk ausgestellt bekommen hat.

Der von der Anlagenkomponente 5 an den Zertifikatsdienst 4 gerichtete Antrag auf Integration in das Kommunikationsnetzwerk der Prozessanlage umfasst ein TLS-Client Zertifikat, wobei die Anlagenkomponente 5 als TLS-Client Zertifikat ihr IDevID-Zertifikat 6 verwendet. Genauer gesagt wird der Antrag auf Integration als ein HTTPS-Datenpaket übertragen, wobei das o.g. TLS-Client Zertifikat zum Signieren des HTTPS-Datenpaketes verwendet wird.

In einem dritten Schritt II validiert der Zertifikatsdienst 4 das von der Anlagenkomponente erhaltene HTTPS-Paket mit dem Antrag und dem TLS-Client Zertifikat. Hierzu prüft der Zertifikatsdienst 4, ob das als TLS-Client Zertifikat verwendete IDevID-Zertifikat 6 von einer vertrauenswürdigen bzw. Zertifizierungsinstanz ausgestellt wurde. Hierzu kann der Zertifikatsdienst 4 beispielsweise auf ein Vertrauensinventar 7 zugreifen, welches auch der Registrierungsstelle 2 und der Zertifizierungsstelle 3 zugänglich ist, und die Zertifizierungsinstanz mit dort hinterlegten, als vertrauenswürdig angesehenen Zertifizierungsinstanzen abgleichen.

Zusätzlich prüft der Zertifizierungsdienst 4 im Rahmen des dritten Schrittes III, ob die den Antrag stellende Anlagenkomponente 5 für eine Integration in das Kommunikationsnetzwerk der Prozessanlage vorgesehen ist. Hierzu greift der Zertifikatsdienst 4 beispielsweise auf Lieferscheine oder Komponentenlisten des Leitsystems zu, in den hinterlegt ist, welche Anlagenkomponenten in das Leitsystem integriert werden sollen. Wenn eine oder beide Prüfungen erfolglos sind, kann der Zertifikatsdienst 4 einen Operator der Prozessanlage kontaktieren und die Integration der Anlagenkomponente 5 in das Kommunikationsnetzwerk der Prozessanlage verweigern.

Für den Fall erfolgreicher Prüfungen leitet der Zertifikatsdienst 4 den, beispielsweise unter Verwendung des CMP-Protokolls erstellten Antrag der Anlagenkomponente auf Integration in das Kommunikationsnetzwerk der Prozessanlage per HTTPS unter Verwendung eines dem Zertifikatsdienst zugeordneten TLS-Client Zertifikats 8 in einem vierten Schritt IV an die Registrierungsstelle 2 weiter. Die Registrierungsstelle 2 prüft unter Verwendung des "Certificate Management Protocols" (CMP), ob das von dem Zertifikatsdienst 4 empfangene HTTPS-Paket von einem vertrauenswürdigen Zertifikatsdienst stammt. Hierzu greift auf das Vertrauensinventar 7 zu, in welchem (unter anderem) vertrauenswürdige Zertifikatsdienste hinterlegt sind. Zudem prüft die Registrierungsstelle 2, ob die Anlagenkomponente 5, die den im HTTPS-Paket enthaltenen Antrag auf Integration generiert hat, in dem Vertrauensinventar 7 bereits hinterlegt ist. Falls dies nicht der Fall ist, entnimmt sie die Daten (insb. den Namen des Herstellers, den Namen der Anlagenkomponente 5, die ID bzw. Seriennummer der Anlagenkomponente 5 aus dem Antrag) und legt diese Daten samt dem IDevID-Zertifikat 6 im Vertrauensinventar 7 der Registrierungsstelle 2 (als einen neuen Inventar-Eintrag) ab.

Für den Fall einer erfolgreichen Prüfung leitet die Registrierungsstelle 2 den Antrag an die Zertifizierungsstelle 3 weiter. Diese stellt für den Fall einer erfolgreichen Validierung des Antrags ein einsatzumgebungsspezifisches Zertifikat, beispielsweise ein gerätespezifisches Zertifikat (wie beispielsweise ein LDevID-Generic-Zertifikat) oder ein applikationsspezifisches Zertifikat oder ein Kommunikationszertifikat, aus und übermittelt dieses über die Registrierungsstelle 2 und den Zertifikatsdienst 4 an die Anlagenkomponente 5. Dabei ist auch das Zertifikat der Wurzelzertifizierungsstelle (in der Figur nicht dargestellt) der Prozessanlage als Einsatzumgebung in der Antwort der Zertifizierungsstelle 3 an die Anlagenkomponente 5 (bei der Verwendung des CMP-Protokolls als "Initial Response" bezeichnet) enthalten.

Durch das beschriebene Leitsystem 1 bzw. das dazugehörige Integrationsverfahren wird ein benutzerfreundliches "Secure Device Onboarding" ermöglicht, ohne dass eine komplexe und umfassende "Secure Device Onboarding"-Infrastruktur zur Verfügung stehen muss.

## Patentansprüche

1. Leitsystem (1) für eine technische Anlage, insbesondere eine Fertigungs- oder Prozessanlage, das wenigstens eine Zertifizierungsstelle (3) umfasst, die für ein Ausstellen und Revozieren von Zertifikaten für Anlagenkomponenten (5) der technischen Anlage zuständig und ausgebildet ist,
**dadurch gekennzeichnet, dass**
in dem Leitsystem (1) ein Zertifikatsdienst (4) implementiert ist, der mit der Zertifizierungsstelle (3) direkt oder indirekt über eine Registrierungsstelle (2) in einer Verbindung gemäß dem HTTPS-Protokoll steht, wobei der Zertifikatsdienst (4) dazu ausgebildet ist, von einer Anlagenkomponente (5) der technischen Anlage einen Antrag auf Integration der Anlagenkomponente (5) in ein Kommunikationsnetzwerk der technischen Anlage auf Basis des HTTPS-Protokolls zu erhalten und die Anlagenkomponente (5) unter Zuhilfenahme eines von der Anlagenkomponente (5) unterstützten Zertifikatsmanagementprotokolls und unter Einbezug der Registrierungsstelle (2) und/oder der Zertifizierungsstelle (3) in das Kommunikationsnetzwerk der technischen Anlage zu integrieren.

2. Leitsystem (1) nach Anspruch 1, bei dem der Zertifikatsdienst (4) dazu ausgebildet ist, eine Identifikation der in das Leitsystem (1) zu integrierenden Anlagenkomponente (5) mit Informationen aus dem Leitsystem (1) abzugleichen, welche Informationen Aussagen darüber umfassen, welche Anlagenkomponenten (5) für eine Integration in das Kommunikationsnetzwerk der technischen Anlage vorgesehen sind.

3. Leitsystem (1) nach Anspruch 2, bei dem der Zertifikatsdienst (4) dazu ausgebildet ist, einen Operator des Leitsystems (1) über das Ergebnis der Prüfung zu benachrichtigen.

4. Leitsystem (1) nach Anspruch 2 oder 3, bei dem der Zertifikatsdienst (4) dazu ausgebildet ist, die Integration der Anlagenkomponente (5) in das Kommunikationsnetzwerk der technischen Anlage zu verweigern, wenn die Prüfung ergeben hat, dass die Integration gemäß den Informationen aus dem Leitsystem (1) nicht vorgesehen ist.

5. Leitsystem (1) nach einem der vorangegangenen Ansprüche, bei dem der Zertifikatsdienst (4) oder die Registrierungsstelle (2) dazu ausgebildet ist, zu prüfen, ob der von der Anlagenkomponente (5) an ihn gerichtete Antrag auf Integration in das Kommunikationsnetzwerk der technischen Anlage ein von einer vertrauenswürdigen Zertifizierungsinstanz ausgestelltes, der Anlagenkomponente (5) als TLS-Client Zertifikat (6) zugeordnetes Zertifikat umfasst.

6. Leitsystem (1) nach Anspruch 5, bei dem der Zertifikatsdienst (4) oder die Registrierungsstelle (2) dazu ausgebildet ist, für den Fall einer erfolgreichen Prüfung den Antrag der Anlagenkomponente (5) auf Integration in das Kommunikationsnetzwerk der technischen Anlage unter Verwendung eines dem Zertifikatsdienst (4) zugeordneten TLS-Client Zertifikats (6) an die Registrierungsstelle (2) oder die Zertifizierungsstelle (3) weiterzuleiten.

7. Leitsystem (1) nach einem der vorangegangenen Ansprüche, bei dem die Registrierungsstelle (2) oder die Zertifizierungsstelle (3) dazu ausgebildet sind, zu prüfen, ob der Zertifikatsdienst (4) vertrauenswürdig ist, insbesondere durch einen Abgleich mit einem Vertrauensinventar (7), vorzugsweise einem Vertrauensinventar (7) der Registrierungsstelle (2) oder der Zertifizierungsstelle (3).

8. Leitsystem (1) nach einem der vorangegangenen Ansprüche, bei dem Registrierungsstelle (2) oder die Zertifizierungsstelle (3) dazu ausgebildet sind, zu prüfen, ob ihnen eine Identität der Anlagenkomponente (5) bereits bekannt ist, und für den Fall, dass diese bisher nicht bekannt war, die Identität in einem Inventar, insbesondere dem Vertrauensinventar (7), zu hinterlegen.

9. Leitsystem (1) nach einem der vorangegangenen Ansprüche, bei dem die Zertifizierungsstelle (3) dazu ausgebildet ist, ein Kommunikationszertifikat für die Kommunikation innerhalb des Kommunikationsnetzwerkes der technischen Anlage direkt, oder indirekt über die Registrierungsstelle (2), an den Zertifizierungsdienst (5) zu übermitteln, welcher das Kommunikationszertifikat der Anlagenkomponente (5) zur Verfügung stellt, um sie in das Kommunikationsnetzwerk der technischen Anlage zu integrieren.

10. Computerimplementierter Zertifikatsdienst für ein Leitsystem (1) einer technischen Anlage, insbesondere Prozess- oder Fertigungsanlage,
der dazu ausgebildet ist, mit einer Zertifizierungsstelle (3) des Leitsystems (1) der technischen Anlage direkt, oder indirekt über eine Registrierungsstelle (2) des Leitsystems (1) der technischen Anlage, eine Verbindung auf Basis des HTTPS-Protokolls aufzubauen,
und der dazu ausgebildet ist, von einer Anlagenkomponente (5) der technischen Anlage einen Antrag auf Integration in eine Kommunikationsnetzwerk der technischen Anlage auf Basis des HTTPS-Protokolls zu erhalten und die Anlagenkomponente (5) unter Zuhilfenahme eines von der Anlagenkomponente (5) unterstützten Zertifikatsmanagementprotokolls und unter Einbezug der Registrierungsstelle (2) und/oder der Zertifizierungsstelle (3) sicher in ein Kommunikationssystem der technischen Anlage zu integrieren.

11. Verfahren zur sicheren Integration einer Anlagenkomponente (5) in ein Kommunikationsnetzwerk einer technischen Anlage, insbesondere Prozess- oder Fertigungsanlage, umfassend:
a) Richten eines Antrages auf Integration in das Kommunikationsnetzwerk der technischen Anlage auf Basis des HTTPS-Protokolls durch die Anlagenkomponente (5) an einen Zertifikatsdienst (4) eines Leitsystems (1) für die technische Anlage, wobei das Leitsystem (1) wenigstens eine Zertifizierungsstelle (3) umfasst, die für ein Ausstellen und Revozieren von Zertifikaten für Anlagenkomponenten (5) der technischen Anlage zuständig und ausgebildet ist,
b) Herstellen einer Verbindung oder Nutzen einer bestehenden Verbindung des Zertifikatsdienstes (4) mit der Registrierungsstelle (2) oder der Zertifizierungsstelle (3) auf Basis des HTTPS-Protokolls;
c) Integrieren der Anlagenkomponente (5) unter Zuhilfenahme eines von der Anlagenkomponente (5) unterstützten Zertifikatsmanagementprotokolls und unter Einbezug der Registrierungsstelle (2) und/oder der Zertifizierungsstelle (3) des Leitsystems (1) in das Kommunikationsnetzwerk der technischen Anlage durch den Zertifizierungsdienst (4).

12. Verfahren nach Anspruch 11, bei dem der Zertifikatsdienst (4) prüft, ob der von der Anlagenkomponente (5) an ihn gerichtete Antrag auf Integration in das Kommunikationsnetzwerk der technischen Anlage ein von einer vertrauenswürdigen Zertifizierungsinstanz ausgestelltes, der Anlagenkomponente (5) als TLS-Client Zertifikat (6) zugeordnetes Zertifikat umfasst.

13. Verfahren nach Anspruch 12, bei dem der Zertifikatsdienst (4) für den Fall einer erfolgreichen Prüfung den Antrag der Anlagenkomponente (5) auf Integration in das Kommunikationsnetzwerk der technischen Anlage unter Verwendung eines dem Zertifikatsdienst (4) zugeordneten TLS-Client Zertifikats (6) an die Registrierungsstelle (2) oder die Zertifizierungsstelle (3) weiterleitet.

14. Verfahren nach einem der Ansprüche 11 bis 13, bei dem die Zertifizierungsstelle (3) ein Zertifikat für die Authentifizierung und/oder Kommunikation innerhalb des Kommunikationsnetzwerkes der technischen Anlage direkt, oder indirekt über die Registrierungsstelle (2), an den Zertifizierungsdienst (4) übermittelt, welcher das Kommunikationszertifikat der Anlagenkomponente (5) zur Verfügung stellt, um sie in das Kommunikationsnetzwerk der technischen Anlage zu integrieren.

15. Verfahren nach einem der Ansprüche 11 bis 14, bei dem die Anlagenkomponente (5) ein Verfahren zur automatisierten Erkennung des Zertifikatsdienstes (4) verwendet, insbesondere ein mDNS-, DNS/DHCP- oder ein GRASP-Verfahren.
